# EUROPÄISCHE PATENTSCHRIFT

(11) **EP 0 726 643 B1**
(45) Veröffentlichungstag und Bekanntmachung des Hinweises auf die Patenterteilung: **12.05.1999**
(21) Anmeldenummer: 96100423.1
(22) Anmeldetag: 12.01.1996
(51) Int. Cl.: H02P 3/26, B41F 33/12

(54) **Verfahren und Vorrichtung zum Bremsen eines elektrischen Hauptantriebes einer Druckmaschine**
Method and device for braking the electric main drive of a printing machine
Méthode et appareil de freinage d'un entraînement principal pour machine d'impression

(30) Priorität: 08.02.1995 DE 19504069
(43) Veröffentlichungstag der Anmeldung: 14.08.1996
(73) Patentinhaber: MAN Roland Druckmaschinen AG, 63075 Offenbach (DE)
(72) Erfinder: Schwinn, Klaus, D-63150 Heusenstamm (DE)
(74) Vertreter: Marek, Joachim, Dipl.-Ing.

(56) Entgegenhaltungen:
- EP-A- 0 243 728
- EP-A- 0 572 805
- DE-B- 1 173 580

## Beschreibung

Die Erfindung betrifft ein Verfahren sowie eine Vorrichtung zum Bremsen eines elektrischen Hauptantriebes einer Druckmaschine gemäß dem Oberbegriff des Verfahrens bzw. entsprechenden Vorrichtungsanspruches.

Bogenoffsetdruckmaschinen weisen an einer Vielzahl von Stellen elektrisch abgesicherte Verschutzungen auf. Diese Verschutzungen sind dabei in sogenannte äußere und innere Verschutzungen unterteilt. Äußere Verschutzungen stellen dabei beispielsweise Klapptritte zwischen den Druckwerken, Schiebe- oder Klappschutze vor den Druck-, Farb- und Feuchtwerken, Schutzeinrichtungen an Lackier- oder sonstigen Veredelungseinrichtungen sowie Verschutzungen am Ausleger dar. Wird einer dieser äußeren Verschutzungen, z.B. ein Klapptritt während des Druckbetriebes geöffnet, so wirkt dies wie ein über die extra Not-Aus-Taster gegebenes Kommando, d.h. die Druckmaschine wird schnellstmöglich zum Stillstand gebracht. Innere Verschutzungsmaßnahmen stellen insbesondere die vor einlaufenden Walzenspalten angebrachten beweglichen Einlaufschutze dar, welche ebenfalls mit Endschaltern in Wirkverbindung stehen. Diese Verschutzungen sind nur bei geöffneten äußeren Verschutzungsmitteln, z.B. Klapptritt offen, zu erreichen, d.h. insbesondere beim Walzenwaschen oder beim Positionieren der Druckwerkszylinder zu Servicezwecken. Bei geöffneten äußeren Verschutzungen darf dabei die Druckmaschine aus Gründen des Personenschutzes nur Laufkommandos mit niedriger Geschwindigkeit ausführen, wobei hier als Beispiel der Schleichgang und das Tippen-Vorwärts bzw. Trippen-Rückwärts zu nennen ist. Bei Auslenkung eines elektrisch abgesicherten Einlaufschutzes hat dabei die Druckmaschine innerhalb eines auf den Umfang des entsprechend abgesicherten Zylinders bezogenen Weges zum Stillstand zu kommen, welche kleiner ist als der auf den Zylinderumfang bezogene Auslenkungsweg des Einlaufschutzes. Eine Bogenoffsetdruckmaschine weist ferner parallel zu den nockenbetätigten Endschaltern der äußeren und inneren Verschutzung noch Not-Aus-Taster auf.

Moderne Bogenoffsetdruckmaschinen weisen in der Regel Gleichstromantriebe mit netzgeführten Stromrichtern (z.B. Vier-Quardranten-Antrieb) auf, welcher einen hohen Drehzahlstellbereich, hohe Leistungen ferner auch ein elektrisches Bremsen ermöglichen. Damit eine derartig angetriebene Bogenoffsetdruckmaschine die vorgenannten Sicherheitsauflagen für das Not-Aus-Kommando gerade für den Bereich der inneren Verschutzung (z.B. Einlaufschutz) erfüllen kann, sind zusätzliche Maßnahmen nötig, um die Bremsvorgänge innerhalb der vorgegebenen Rahmen zu erfüllen.

Aus der EP 0 243 728 B1 ist dabei ein Sicherheitssystem für eine Druckmaschine bekannt, bei der neben der Drehzahlregelung des elektrischen Hauptantriebes zusätzlich noch eine Soll-Ist-Drehzahl-Überwachung erfolgt, wobei bei einer unzulässig großen Soll-Ist-Abweichung der Drehzahl eine elektrisch betätigbare Bremse eingelegt wird. Die mechanische Bremse wird also nur dann betätigt, wenn der Ist-Wert der Drehzahl nicht schnell genug abnimmt. Zur Erfassung des Ist-Wertes der Drehzahl des Antriebes findet dabei in der Regel ein sogenannter Tachogenerator Verwendung. Gemäß diesem vorbekannten Überwachungsprinzip erfolgt dabei sowohl die Drehzahlregelung als auch die zusätzliche Drehzahlüberwachung mittels dem Signal des Tachogenerators. Somit hängt die Zuverlässigkeit dieses Sicherheitssystems auch von der Zuverlässigkeit des verwendeten Tachogenerators ab, was als nachteilig anzusehen ist.

Aus der EP 0 572 805 A2 ist eine Schleichgangdrehzahlüberwachung für Antriebe in Druckmaschinen bekannt, welche einen Gleichstrom-Nebenschlußmotor aufweisen. Es soll gewährleistet sein, daß in bestimmten Betriebszuständen, z.B. beim Schleichgang, keine unzulässig hohe Drehzahlabweichung auftritt. Dazu wird die Ankerspannung des Motors überwacht und bei einer unzulässig hohen Abweichung ein Steuerstromkreis unterbrochen. Es erfolgt also eine reine Drehzahlüberwachung des Antriebes, so daß nur durch zusätzliche, nicht genannte Maßnahmen die Einhaltung eines geforderten Bremsvorganges feststellbar ist.

Aus der DE-B-11 73 580 ist eine Einrichtung zum elektrischen und mechanischen Bremsen eines Asynchronmotors bekannt. Der Motor weist eine Einrichtung zum generatorischen Bremsen sowie zum mechanischen Bremsen auf. Zur Anpassung der Bremsmomentcharakteristik an verschiedenen Anforderungen ist vorgesehen, zusätzlich zu dem elektrischen Bremsen die mechanische Bremse einzulegen, wobei sich dadurch die Bremswirkungen addieren.

Aufgabe der vorliegenden Erfindung ist es daher, ein Verfahren sowie eine Vorrichtung gemäß dem jeweiligen Hauptanspruch derartig zu erweitern, so daß insbesondere ein auf die Betätigung eines inneren Einlaufschutzes ausgelöster Bremsvorgang in jedem Falle innerhalb des vorgesehen Bremsweges ausgeführt wird.

Gelöst wird diese Aufgabe durch die kennzeichnenden Merkmale des entsprechenden Verfahrens- bzw. Vorrichtungsanspruches. Weiterbildungen der Erfindung ergeben sich dabei aus den Unteransprüchen.

Gemäß der Erfindung ist vorgesehen, daß gerade die Bremsvorgänge, welche nach einer Betätigung eines Not-Aus-Kommandos ausgelöst werden, zunächst rein elektrisch erfolgen und nach einem kurzen, vorgegebenen Zeitintervall ein momentenfrei Schalten des Hauptantriebes bei gleichzeitigem Einlegen der mechanischen Bremse erfolgt. Die Zeitspanne bzw. die Verzögerung, nach welchem auf die Phase des rein elektrischen Bremsens das momentenfreien Schalten des Hauptantriebes bei gleichzeitigem Einlegen der mechanischen Bremse erfolgt, ist dabei derartig gewählt, so daß auch bei einem vollkommenen Versagen des elektrischen Hauptantriebes die Druckmaschine innerhalb der vorgegebenen Wegstrecke (bezogen aufden Umfang eines Druckwerkzylinders) durch die mechanische Bremse zum Stillstand gebracht wird. Die vorgenannte Zeitspanne bzw. Verzögerungskonstante zwischen dem direkt ausgelösten elektrischen und dem nachfolgenden mechanischen Bremsen ist dabei ferner auch derartig gewählt, so daß im störungsfreien Fall das Bremsen weitestgehend elektrisch erfolgt, d.h. der gesamte bzw. überwiegende Bremsvorgang durch Steuern des entsprechenden Ankerstromes durchgeführt wird. Die elektrisch betätigbare, mechanisch wirkende Bremse wird also letztlich zu einem Zeitpunkt eingelegt, zu welchem die Druckmaschine den Stillstand entweder bereits erreicht hat oder lediglich nur noch eine geringe Geschwindigkeit aufweist. Die Abnutzung der Bremse sowie die Beanspruchung des mechanischen Antriebszuges sind dementsprechend gering.

Die zuvorstehend genannte Zeitverzögerung bzw. Zeitkonstante, welche zwischen dem direkt ausgelösten elektrischen und dem darauffolgenden mechanischen Bremsen vorzusehen ist, wird insbesondere empirisch bestimmt. Dabei ist der geringstmögliche Lastfall einer Druckmaschine anzusetzen, also beispielsweise derjenige Antriebszustand ohne Bogenlauf, ohne Farbe im Farb- und Druckwerk, abgestellten Druckwerkszylindern usw.. Da im normalen Betriebsfall entsprechend der Zügigkeit der Farbe im Farb- und Druckwerk, bei angestelltem Druckwerkszylinder oder bei Papierlaufvom Hauptantrieb eine zusätzliche Last aufgewendet werden muß, ist durch diese Art der Zeitbemessung gewährleistet, daß der Anhalteweg bei einem Not-Aus-Kommando in einem derartigen Betriebsfall stets geringer ist als die maximal zulässige Strecke und ferner der größte, wenn nicht gerade der ganze Teil der Bewegungsenergie der Druckmaschine im störungsfreien Zustand durch rein elektrisches Bremsen erfolgt.

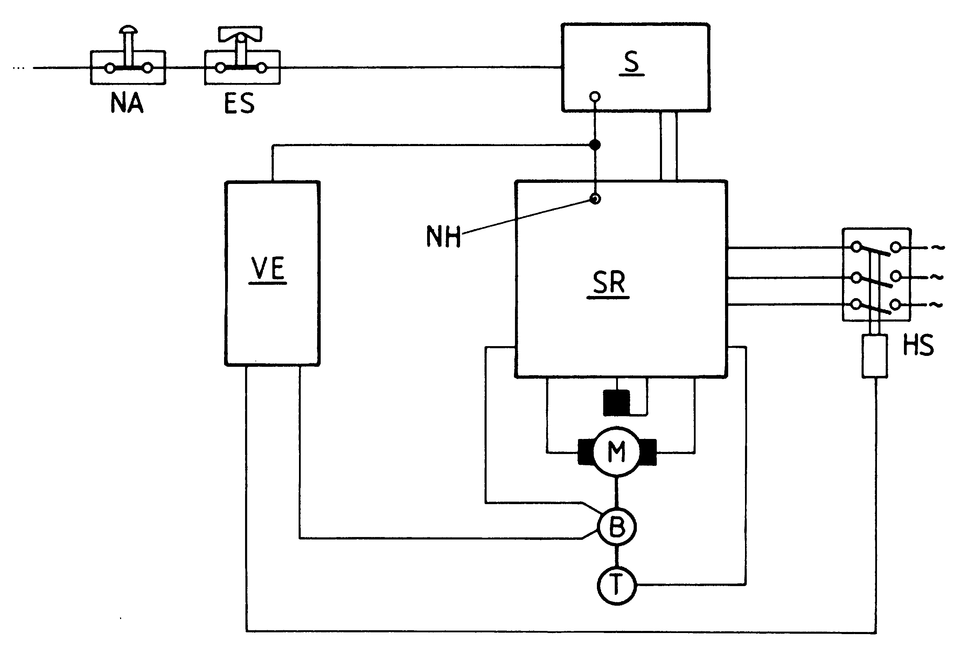

Des weiteren erfolgt die Erläuterung eines Ausführungsbeispiels der Erfindung anhand der Zeichnung.

Die an den Druckwerken und sonstigen Aggregaten befindlichen Not-Aus-Taster NA sowie die an den aüßeren und inneren Verschutzungen, insbesondere Einlaufschutzen angebrachten Endschalter ES sind als Öffner ausgeführt und signaltechnisch in Reihe an eine Steuerung S der Druckmaschine geschaltet. Die Entschalter ES werden dabei über Nocken oder sonstige Betätigungseinrichtungen ausgelöst. Die Steuerung S der nicht dargestellten Druckmaschine steht über ein Bussystem mit einem netzgeführten Stromrichter SR eines Gleichstrommotors M in Wirkverbindung. Der Gleichstrommotor M ist dabei mit einer elektrisch auslösbaren, mechanischen Bremse B sowie einem Tachogenerator T gekoppelt. Bei der elektrisch betätigbaren, mechanischen Bremse B kann es sich um eine elektrisch zu lüftende oder insbesondere um eine pneumatische Bremse handeln. Die Bremse B ist dabei mit dem netztgeführten Stromrichter SR gekoppelt, so daß zum Anlaufen der Maschine die Bremse B gelüftet werden kann. Zur Ist-Drehzahlermittlung des Gleichstrommotors M ist ferner der Tachogenerator T mit dem Stromrichter SR verbunden, so daß dieser aufgrund des Ist-Wertes der Drehzahl in Verbindung mit einem vorgegebenen Soll-Wert die entsprechende Bestromung des Ankers vornehmen kann.

Die Steuerung S steht ferner über eine eigene Verdrahtung mit der sogenannten Nothaltklemme NH des Stromrichters SR in Verbindung. Wird über einen der Not-Aus-Taster NA bzw. der Endschalter ES das Not-Aus-Kommando gegeben, also der entsprechende Kontakt geöffnet, so erfolgt durch die Steuerung S ein Öffnen dieser Klemme, woraufhin der Stromrichter SR den Gleichstrommotor M mittels dem größtmöglichen Ankerstrom bremst. Nicht dargestellt ist in der Zeichnung, daß neben den ersten Kontakten der Not-Aus-Taster NA sowie der Endschalter ES, welche mit der Steuerung S verbunden sind, noch zweite oder weitere Kontakte vorgesehen sein können, welche über eigene Leitungssysteme ebenfalls die Nothaltklemme NH und/oder direkt die noch zu erläuternde Verzögerungseinrichtung VE schalten.

Neben dem Schalten der Nothaltklemme NH des Stromrichters SR erfolgt durch die Steuerung S eine parallele Signalvergabe an eine erfindungsgemäß vorgesehene Verzögerungseinrichtung VE. Diese Verzögerungseinrichtung VE ist dabei gemäß Zeichnung prinzipiell zu verstehen und an den Verbindungsweg zwischen Steuerung S und Stromrichter SR geschaltet. Bei der Verzögerungseinrichtung VE kann es sich in einfacher Weise um ein Zeitrelais handeln, d.h. um ein Relais, welches auf ein Eingangsignal ein um eine vorgegebene Zeitkonstante verzögertes Ausgangssignal bereitsstellt.

Die Verzögerungseinrichtung VE ist über separate Leitungswege mit der Bremse B des Gleichstrommotors M sowie dem Hauptschütz HS des Stromrichters SR verbunden. Auf ein Ausgangssignal der Verzögerungseinrichtung VE erfolgt somit ein Einlegen der Bremse B sowie das stromlos Schalten des Stromrichters SR über das Hauptschutz HS. Durch das vom Netz Trennen des Stromrichters SR erfolgt somit ein momentenfrei Schalten des Gleichstrommotors M.

Durch die voranstehend beschriebene Verschaltung der Not-Aus-Taster NA sowie der Endschalter ES in der Steuerung S, deren Verschaltung mit der Nothaltklemme NH des Stromrichters SR, die Parallelschaltung dazu über die Verzögerungseinrichtung VE mit der Bremse B sowie dem Hauptschütz HS ist gewährleistet, daß insbesondere bei Auslenkung eines nicht dargestellten Einlaufschutzes und die dadurch ausgelöste Betätigung eines zugeordneten Endschalter ES zunächst ein elektrisches Bremsen des Gleichstrommotores M über den Stromrichter SR und um eine bestimmte Zeitspanne durch die Verzögerungseinrichtung VE verzögert das momentenfrei Schalten des Gleichstrommotores M über das Hauptschütz HS bei gleichzeitigem Einlegen der mechanischen Bremse B erfolgt. Erfindungsgemäß lassen sich dadurch kürzeste Anhaltewege im Falle eines Not-Aus-Kommandos gewährleisten, ohne daß aufwendige, Redunanzen verursachende Zusatzmaßnahmen getroffen werden müssen. Bei ordnungsgemäß arbeitendem Stromrichter SR wird auf ein Not-Aus-Kommando der Gleichstrommotor M ausschließlich oder zumindest überwiegend über den Stromrichter SR elektrisch gebremst. Durch die Verzögerungseinrichtung VE ist gewährleistet, daß im Falle eines Fehlers während des rein elektrischen Bremsvorganges durch verzögertes Einlegen der Bremse B sowie paralleles momentenfrei Schalten des Gleichstrommotors M aufjeden Fall ein Stillsetzen der Druckmaschine innerhalb der vorgesehenen maximalen Wegstrecke erfolgt.

Nicht dargestellt sind in der Zeichnung Einrichtungen, durch welche nach dem Stillsetzen der Maschine das Hauptschutz wieder geschlossen und somit - wenn die Störungsursache beseitigt worden ist - ein Anlaufen der Maschine wieder ermöglicht wird. Hiebei kann es sich in einfacher Weise um eine Schaltung handeln, welche den Bewegungszustand des Gleichstrommotors M erfasst (Stop-Sensor), und das Hauptschütz HS schließt, wenn die Maschine den Stillstand erreicht hat.

### Bezugszeichenliste

- NA: Not-Aus-Taster
- ES: Endschalter
- S: Steuerung
- SR: Stromrichter
- M: Gleichstrommotor
- B: Bremse
- R: Tachogenerator
- NH: Not-Halt-Klemme
- VE: Verzögerungseinrichtung
- HS: Hauptschütz

## Patentansprüche

1. Verfahren zum Bremsen eines elektrischen Hauptantriebes einer Druckmaschine, insbesondere Bogenoffsetdruckmaschine, wobei auf ein gegebenes Not-Aus-Kommando das elektrische Bremse eines Gleichstrommotores und das Einlegen einer mechanischen Bremse erfolgt,
**dadurch gekennzeichnet,**
daß auf ein gegebenes Not-Aus-Kommando unmittelbar das elektrische Bremsen des Gleichstrommotors und zeitlich dazu verzögert das momentenfrei Schalten des Gleichstrommotors sowie das Einlegen der mechanischen Bremse erfolgt.

2. Vorrichtung zur Durchführung des Verfahrens nach Anspruch 1, wobei der elektrische Hauptantrieb (SR, M) der Druckmaschine einen Gleichstrommotor (M), einen vorgeschalteten Stromrichter (SR), eine mit dem Gleichstrommotor (M) gekoppelte mechanische Bremse (B) sowie Not-Aus-Taster (NA) zum Auslösen eines elektrischen und mechanischen Bremsvorganges aufweist,
**dadurch gekennzeichnet,**
daß parallel zu dem Stromrichter (SR), welcher aufgrund eines Not-Aus-Kommandos unmittelbar ein elektrisches Bremsen des Gleichstrommotors (M) bewirkt, eine Verzögerungseinrichtung (VE) in Form eines Zeitrelais geschaltet ist, durch welche nach einer vorgegebenen Zeitspanne der Gleichstrommotor (M) momentenfrei schaltbar und gleichzeitig die mechanische Bremse (B) einlegbar ist.

3. Vorrichtung nach Anspruch 2,
**dadurch gekennzeichnet,**
daß zum momentenfrei Schalten des Gleichstrommotors (M) die Verzögerungseinrichtung (VE) mit einem dem Stromrichter (SR) vorgeschalteten Hauptschütz (HS) in Wirkverbindung steht.

## Claims

1. Process for braking an electrical main drive of a printing press, particularly an offset sheet printing press, wherein on a given emergency off command, the electrical braking of a direct current motor and the application of a mechanical brake takes place, characterised in that on a given emergency off command, the electrical braking of the direct current motor takes place directly and delayed timewise thereto, the momentum-free switching of the direct current motor as well as the application of the mechanical brake takes place.

2. Device for carrying out the process according to Claim 1 wherein the electrical main drive (SR, M) of the printing press has a direct current motor (M), a previously arranged current rectifier (SR), a mechanical brake (B) linked to the direct current motor (M) as well as an emergency off button (NA) for triggering an electrical and mechanical braking process, characterised in that parallel to the current rectifier (SR), which, on the basis of an emergency off command, directly effects an electrical braking of the direct current motor (M), a delay unit (VE) is connected in the form of a time relay by which, after a predetermined period of time, the direct current motor M can be switched over momentum-free and simultaneously the mechanical brake (B) applied.

3. Device according to Claim 2, characterised in that for the momentum-free switching of the direct current motor (M), the delay unit (VE) is operationally connected with a main protection (HS) connected upstream of the current rectifier (SR).

## Revendications

1. Procédé pour freiner un entraînement principal électrique d'une machine d'impression, en particulier une machine d'impression offset à feuilles, le freinage électrique d'un moteur à courant continu et la mise en oeuvre d'un frein mécanique étant effectués sur un ordre donné d'arrêt d'urgence,
caractérisé en ce que, sur un ordre donné d'arrêt d'urgence, il est effectué directement le freinage électrique du moteur à courant continu et, de façon retardée dans le temps par rapport à cela, la commutation sans moment du moteur à courant continu, ainsi que la mise en oeuvre du frein mécanique.

2. Dispositif pour la mise en oeuvre du procédé selon la revendication 1, l'entraînement principal électrique (SR,M) de la machine d'impression présentant un moteur à courant continu (M), un convertisseur (SR) disposé en amont, un frein mécanique (B) couplé au moteur à courant continu (M), ainsi qu'un bouton-poussoir d'arrêt d'urgence (NA) pour déclencher un processus de freinage électrique et mécanique,
caractérisé en ce que, parallèlement au convertisseur (SR), lequel, en raison d'un ordre d'arrêt d'urgence, agit directement pour freiner électriquement le moteur à courant continu (M), il est monté un dispositif de temporisation (VE) sous forme d'un relais à temporisation, grâce auquel, après un intervalle de temps prédéfini, le moteur à courant continu (M) peut être commuté sans moment et, simultanément, le frein mécanique (B) peut être mis en oeuvre.

3. Dispositif selon la revendication 2,
caractérisé en ce que, pour la commutation sans moment du moteur à courant continu (M), le dispositif de temporisation (VE) est en liaison active avec une protection principale (HS) disposée en amont du convertisseur (SR).
